# DEMANDE DE BREVET EUROPEEN

(11) **EP 1 273 901 A1**
(43) Date de publication de la demande: **08.01.2003**
(21) Numéro de dépôt: 01202539.1
(22) Date de dépôt: 02.07.2001
(51) Int. Cl.: G01N 15/02

(54) **Méthode et appareillage pour mesure automatique de granulométrie et de morphométrie de particules**

(71) Demandeur: Université de Liège, 4020 Liège (BE)
(72) Inventeur: Pirard, Eric, Prof., Université de Liège, 4000 Liège (BE); Godino, Ir. Christian., Université de Liège, 4000 Liège (BE)

(57) **Abrégé**

Appareillage pour mesure automatique de granulométrie et de morphométrie de particules comprenant un dispositif (1.4,1.6,1.8) pour la dispersion de particules de manière à prévenir leur recouvrement relié à un autre dispositif (1.20) pour guider les particules dans un champ focal d'un système d'illumination (1.13) lui même connecté à un dispositif (1.14) pour prise d'image de ces particules et leur analyse à des fins granulométrique et morphométrique. Dans cet appareillage, les particules sont dispersées sur une plaque horizontale et guidées horizontalement dans le champ focal du système d'illumination.

## Description

La présente invention concerne une méthode et un appareillage pour mesure automatique de granulométrie et de morphométrie de particules.

La granulométrie de particules ainsi que leur morphologie est essentielle pour comprendre et analyser leur comportement mécanique (masse volumique apparente avec et sans tassement, fluidité d'écoulement, résistance au cisaillement, angle de talus,...), leur comportement tribologique et leur comportement chimique (cinétique de dissolution, capacité électrique,...).

La granulométrie de particules doit répondre aux normes. Or majorité des normes granulométriques actuelles sont définies en référence à une utilisation de tamis.
Dans l'état de la technique, on fait souvent appel à une analyse individuelle de particules par des techniques d'imagerie. Les techniques d'imagerie ne vont pas de pair avec la conception d'un système mécanique et opto-électronique destiné à automatiser des mesures et à obtenir une estimation non-biaisée des propriétés granulométriques et morphométriques d'un échantillon de plusieurs milliers de particules. Ces techniques sont difficilement compatibles avec les normes établies à partir de mesures issues de tamis.

Les appareillages existants qui utilisent un principe d'analyse d'images (aussi appelé vidéogranulométrie dans ce cas) sont essentiellement basés sur une prise d'images de particules en chute libre à la sortie d'une goulotte vibrante. Cette approche technologique ne permet pas de contrôler une vitesse de chute et encore moins une position des particules face à une caméra. Une superposition des particules est alors possible entraînant une évaluation incorrecte de la granulométrie. D'autre part, deux particules nettement séparées dans l'espace peuvent produire par projection, des ombres qui se chevauchent, entraînant également une évaluation incorrecte de la granulométrie.

Plus particulièrement la demande de brevet WO 94/06092 décrit un système pour mesure automatique de granulométrie de particules par analyse d'images. Le système comprend une bande transporteuse animée d'une translation horizontale. Cette bande transporteuse est pourvue de sillons transversaux destinés à orienter les particules selon une direction préférentielle. D'autre part, les sillons sont séparés par un espacement choisi en fonction de la taille des particules à analyser. Une prise d'image se fait en épiscopie au moyen d'une caméra placée au-dessus de la bande transporteuse. Le système est muni d'un éclairage annulaire placé de manière concentrique autour de l'objectif de la caméra. Ce système est conçu pour classer des particules d'un lot de semences sur base de mesures de longueurs de traversées et de couleurs dans l'image. Un défilement interrompu de la bande à chaque prise d'images est conçu pour une analyse d'environ 300 particules par minute. Une proportion pondérale est estimée de manière empirique au départ d'une surface projetée de chaque particule.
L'appareillage décrit dans WO 94/06092, ne permet pas de collecter une information sur un diamètre critique de tamisage car les particules ne sont pas dans une position plane au repos en raison de l'utilisation de sillons dans la bande transporteuse. D'autre part, l'épiscopie ne permet pas de collecter une information géométriquement correcte pour une mesure précise de taille et de forme d'une particule. Enfin l'appareillage n'est pas adapté à la dispersion et à la prise d'image de particules trop fines (ex. 100µm) et détériore les propriétés de particules friables (ex. café soluble) par le contact avec des éléments mécaniques en mouvement.

Nous avons maintenant trouvé que grâce à une combinaison d'un certain nombre de choix techniques fondamentaux, l'appareillage décrit dans la présente invention permet d'estimer de manière optimale une courbe de tamisage d'un matériau de densité homogène, tout en apportant des avantages significatifs en terme de précision, de représentativité, de vitesse, d'automatisation et de traitement numérique des informations. Grâce à la technologie utilisée, il est possible de mesurer des caractéristiques géométriques inaccessibles par d'autres méthodes telles que la morphologie (concavité, rugosité, émoussé, angularité, réactivité, etc.) de particules.
Une analyse d'images, en particulier une analyse d'images numériques est une technique qui permet d'explorer des propriétés géométriques individuelles de chaque particule. Sa mise en oeuvre correcte suppose de maîtriser les étapes de :
- prise d'un échantillon représentatif
- dispersion optimale des particules
- contrôle de la position spatiale et de la vitesse de défilement de chaque particule
- éclairage du profil ou de la surface de la particule
- prise d'image digitale
- analyse des paramètres géométriques pertinents
estimation des propriétés d'une distribution en nombre ou en mesure

La présente invention concerne un appareillage pour mesure automatique de granulométrie et de morphométrie de particules comprenant:
- un dispositif pour une dispersion de particules de manière à prévenir leur recouvrement relié à
- un dispositif pour guider les particules dans un champ focal d'un système d'illumination connecté à
- un dispositif pour prise d' images de ces particules et leur analyse à des fins granulométrique et morphométrique
- caractérisé en ce que: les particules sont dispersées sur une plaque horizontale et guidées horizontalement dans le champ focal du système d'illumination

Cet appareillage s'adresse à une gamme de particules allant de 5 µm à 20 mm, qu'il s'agisse de poudres minérales (sables, charbons, abrasifs,...), de poudres métalliques, de granules et pellets pharmaceutiques, d'engrais ou de produits agro-alimentaires.
Cet appareillage peut être utilisé par exemple en tant qu'instrument de laboratoire pour le contrôle de la qualité des produits ou bien il peut également être adapté sur une ligne de production, par exemple dans l'industrie minérale, métallurgique, chimique telle que pharmaceutique, agro-alimentaire, phytosanitaire.

Le dispositif pour la dispersion de particules de manière à prévenir leur recouvrement comprend par exemple un échantillonneur rotatif. Cet échantillonneur est destiné à réduire sans biais la quantité de matériau nécessaire, étant donné que des précisions de mesure très grandes pourront être atteintes avec seulement quelques grammes de matériau, soit quelques milliers de particules.
L'échantillonneur peut être amovible et peut être court-circuité si on souhaite analyser le matériau dans sa totalité ou si sa friabilité / ductilité impose de limiter les chocs mécaniques. Le matériau peut alors être directement alimenté dans une goulotte de vibration qui a pour objectif d'étirer un flux de particules et de fournir un débit régulier au système. Une vibration réglable de la goulotte permet d'adapter une fréquence aux propriétés de réponse du matériau granulaire utilisé.

En sortie de goulotte, les particules sont amenées par une chute de hauteur minimale sur une plaque ou une chenille de plaques horizontales, de préférence transparentes (ex. verre) et prennent très rapidement une position de repos. Un réglage précis de vitesse de défilement de la chenille ou bande transporteuse permet d'espacer au mieux les particules tout en ajustant une fréquence de prise d'images en conséquence.
La dispersion des particules sur la ou les plaques est en effet régulée par la hauteur entre l'échantillonneur et la bande transporteuse ainsi que par la vitesse de défilement de la bande transporteuse. Des caractéristiques intrinsèques du matériau jouent également un rôle important dans la dispersion des particules.
Dans des conditions opératoires selon l'invention, des taux de chevauchement de particules très faibles sont obtenus. Ils sont par exemple, de l'ordre de 1/400 pour un sable, 1/200 pour du café soluble.
Pour des matériaux plus adhérents, il peut être souhaitable d'adopter une dispersion à l'air comprimé en sortie de vibreur, par exemple pour du lait en poudre.

Le dispositif pour guider les particules dans le champ focal d'un système d'illumination comprend une ou plusieurs plaques horizontales sur lesquelles sont dispersées les particules . Ces plaques sont de préférence transparentes. Elles peuvent être en verre , en polycarbonate ou tout autre matériau transparent.

Selon un mode particulier de réalisation de l'invention, les plaques sont attachées à une bande transporteuse. La bande transporteuse comprend de préférence deux courroies parallèles guidées par 3 roues crantées.
Chaque particule dispersée sur la plaque horizontale prend alors sa position d'équilibre qui est telle que son centre de gravité soit le plus bas possible. Elle est amenée dans le champ focal d'un système d'illumination.

Selon un autre mode de réalisation de l'invention, les plaques sont attachées à une plate-forme circulaire constituée par exemple d'un disque en acier soudé à un axe motorisé. Une vitesse de rotation peut être régulée en combinaison avec une intensité de vibration de la goulotte pour optimiser la dispersion des particules sur la ou les plaques.

Le système d'illumination fait appel aux systèmes conventionnels d'éclairage épiscopique ou diascopique.
Le système d'illumination comprend de préférence un éclairage diascopique.
De préférence, on choisira un rétroéclairage collimaté et une optique télécentrique. Il est alors possible de prendre une image précise de l'ombre projetée de chaque particule selon un axe perpendiculaire à la plaque transparente . Il peut être démontré qu'au diamètre du plus grand cercle inscrit dans la surface projetée d'une particule correspond le diamètre critique de passage de la particule à travers un tamis.
Lorsque les particules se présentent sur la plaque, il est également possible de procéder à une prise d'image en lumière diffuse ou en lumière coaxiale de manière à récupérer des informations sur une couleur et un état de surface de chaque particule. Il est également possible d'exploiter cette position contrôlée pour procéder à une mesure d'épaisseur de la particule (altitude relative au plan de la plaque de verre) en utilisant un principe de triangulation laser ou d'imagerie laser confocale.

En particulier une adoption d'un éclairage collimaté de diode LED rouge et d'une optique télécentrique permet d'élargir au mieux la profondeur de champ et de garantir les meilleures conditions d'imagerie pour chaque particule.

Grâce à une uniformité d'éclairage et à des conditions optiques optimales, l'ombre portée de chaque particule se contraste très nettement sur le fond. Ce contraste reste valable pour des particules transparentes telles que des diamants. La prise d'images en mode collimaté fournit un contour bien contrasté qui suffira à éliminer par voie logicielle les régions transparentes du coeur des grains.
L'utilisation d'un seuil uniforme, réglable de manière interactive suffira a recueillir l'ombre projetée de chaque particule.

La prise d'image peut se faire par exemple avec une caméra CCD linéaire ou matricielle. Ces caméras ont des fréquences de prises d'images qui peuvent être ajustée en fonction de la vitesse de défilement de la bande transporteuse.
La luminosité de l'éclairage est éventuellement augmentée pour compenser la perte d'intensité du contraste en raison de vitesses d'acquisitions plus grandes. A titre indicatif, l'analyse de 5000 particules par minutes dans la gamme des 200 µm peut être obtenue.
Il faut remarquer que l'étendue de la distribution granulométrique qui peut être analysée en une seule passe dépend de l'optique utilisée et de la résolution du dispositif de prise d'image. Le recours à des caméra CCD linéaires permet d'envisager une résolution suffisante pour traiter des gammes dimensionnelles de 5µm à 5mm. Une camera CCD courante (ex. 1300x1024) permet de traiter une dynamique granulométrique de 1: 1000. En pratique, en considérant la probabilité d'inclusion d'une particule dans l'image et l'élimination du bruit, il est préférable avec une telle caméra de se contenter d'analyser une dynamique de 1 : 200. Quand un grossissement de particule est très fort, la profondeur de champ est limite. Pour résoudre ce problème, il importe d'avoir une mécanique de prise d'image très précise.

Une image binaire peut donc être obtenue. Elle sera traitée par analyse d'images au moyen d'un logiciel pour obtenir des informations relatives à la surface et au périmètre de l'ombre projetée, à la surface et au périmètre de l'enveloppe convexe, aux diamètres de Feret, à l'allongement, au diamètre du cercle inscrit et à de nombreuses autres notions morphométriques dérivées de travaux originaux en morphologie mathématique.

Grâce à la précision de mesure du diamètre du cercle inscrit et à l'adoption d'un pondérateur précis du poids relatif de chaque particule, il est possible d'évaluer une courbe granulométrique en nombre, d'un lot de particules.

Il est important de noter qu'aucun paramétrage particulier n'est nécessaire, mais qu'une telle exactitude de mesure dépend de la qualité de la dispersion, du contrôle de positionnement de chaque particule et de la précision de la prise de mesures.
Grâce à une automatisation complète du procédé, des statistiques sur le matériau (comptage, moyenne, variance, histogrammes,...) peuvent être délivrées en temps réel au fur et à mesure du défilement des particules. Les contours individuels de chaque particule (chaîne de Freeman) sont associés dans une base de données à leurs mesures géométriques ce qui permet à tout moment d'interroger les résultats obtenus.

Lorsque les particules sortent du champ focal du système d'illumination, elles sont récupérées.
De préférence, l'appareillage selon l'invention comprend un système de nettoyage de plaque. Après passage dans le champ focal du système d'illumination, les plaques sont déchargées des particules dans la partie inférieure de la bande transporteuse ou de la plate-forme circulaire . La plupart des particules tombent par gravité et sont receuillies dans un collecteur. Les plus petites particules peuvent être détachées au moyen d'une ou plusieurs brosses.

L'invention est illustrée au moyen des figures et exemples suivants :
Brève description des figures
Fig 1a : schéma de prise d'image par rétroéclairage et optique télécentrique.
Fig 1b : grossissement d'une partie de la fig.1a concernant la projection de l'image de la particule sur un dispositif de prise d'image avec un diamètre critique du cercle inscrit.
Fig 2 : schéma du premier modèle de réalisation de l'appareillage selon l'invention
Fig 3 : Schéma du système de réglage du débit entre la sortie de l'échantillonneur et la bande transporteuse.
Fig 4 : Parallélisme et synchronisation des deux courroies crantées, fixation d'une plaque de verre.
Fig 5 : schéma des deux systèmes de guidage de la bande transporteuse pour assurer l'horizontalité des plaques
Fig 6 : schéma du dispositif pour guider les particules au moyen d'une plate-forme tournante.

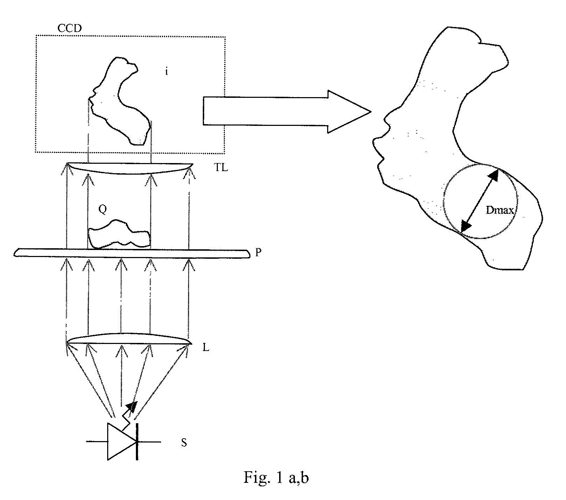

Dans la figure 1a, la particule Q est déposée sur une plaque P transparente.
Une source lumineuse S envoie sur la particule Q par l'intermédiaire d'une lentille L, un faisceau lumineux engendrant une image i de l'ombre de la particule projetée selon un axe perpendiculaire à la plaque transparente P, sur un écran de dispositif de prise d'image tel que par exemple une caméra CCD, après focalisation par lentille télécentrique TL. Au diamètre Dmax du plus grand cercle inscrit dans la surface projetée i correspond le diamètre critique de passage à travers un tamis (fig 1b)

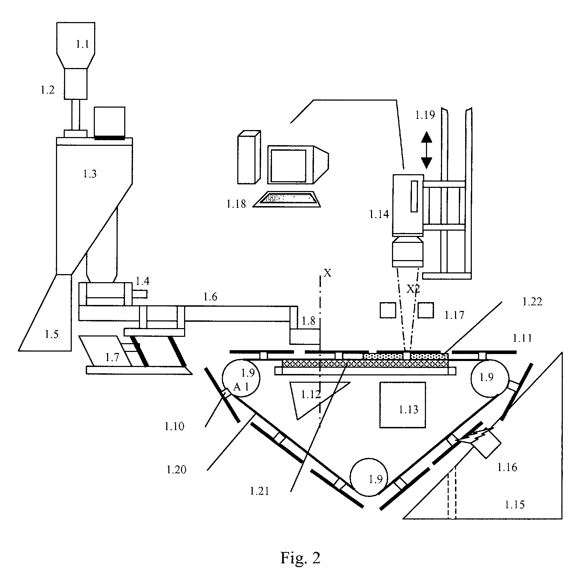

Dans la figure 2 est décrit un mode de réalisation de l'appareillage selon l'invention.
Les particules sont alimentées au travers d'un entonnoir (1.1) et passent à travers une valve de réglage (1.2) avant de tomber dans un échantillonneur rotatif (1.3). L'échantillonneur est constitué d'un cône avec une ouverture rectangulaire dont la vitesse peut être continuellement ajustée de manière à rendre homogène le débit de matériau. A la sortie de l'échantillonneur, un flux de particules tombe dans une goulotte vibrante constituée de trois parties 1.4, 1.6 et 1.8 puis sur les plaques de verres fixées sur deux courroies crantées 1.20 amenant les particules dans le champ focal d'un système d'illumination 1.13. La partie 1.8 terminale est utilisée pour permettre aux particules d'être amenées aussi prêt que possible des plaques en verre 1.11 et évite une trop grande dispersion des particules.
De petites quantités de particules peuvent tomber dans l'espacement entre deux plaques adjacentes, elles sont alors recueillies dans un collecteur 1.12.

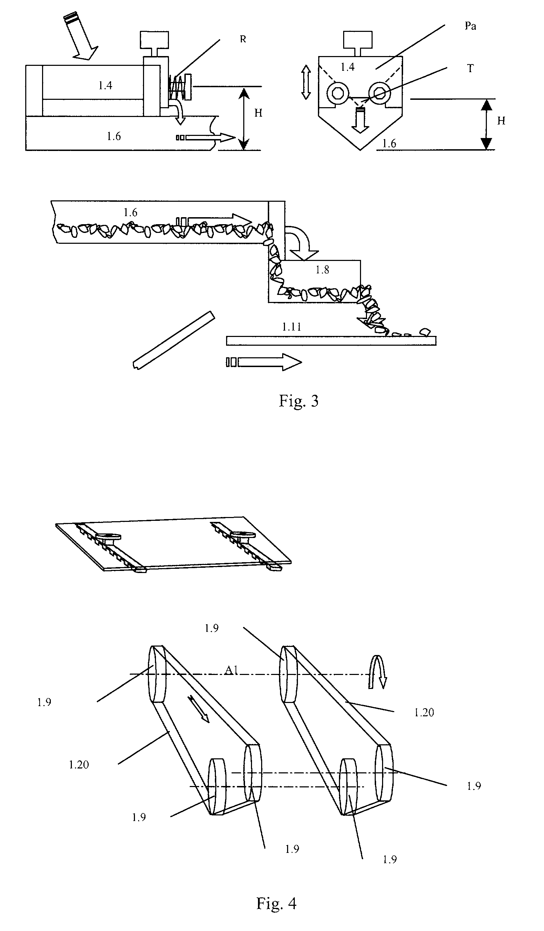

Un réglage du débit de matière entre la goulotte 1.4 et 1.6 est obtenu avec un trou T à section variable (fig.3). Une hauteur H, entre la paroi Pa et le fond de la goulotte 1.6 peut être variée en fonction du débit désiré. Deux ressorts R fixent la paroi Pa sur le bord de la goulotte 1.4 et limitent le passage des particules dans le trou T.

Dans la figure 4 est représentée la bande transporteuse constituée de deux courroies parallèles guidées par trois roues crantées 1.9. Une série de cubes en caoutchouc 1.10 renfermant une tige filetée sont fixés sur la partie inférieure des deux courroies du dispositif qui guide les particules dans le champ focal du système d'illumination.
Les deux courroies de la bande transporteuse sont motorisées et synchronisées. Chaque plaque transparente est fixée sur les courroies de la bande transporteuse par des vis préférentiellement de nylon.

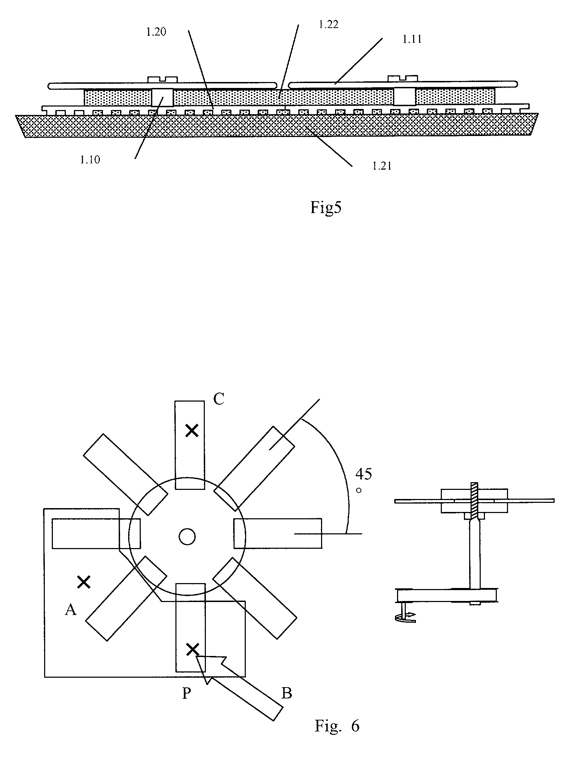

Dans la figure 5 est représenté un premier système de guidage 1.21 qui est fixé au châssis (non représenté) de la bande transporteuse. Ceci permet un ajustement de la hauteur et de l'horizontalité des deux courroies 1.20.
Un deuxième système de guidage 1.22 contrôle le positionnement de la plaque de verre dans le champ focal du système d'illumination 1.13. Ce système de guidage est constitué de deux barres T par exemple en téflon ayant deux fois la longueur d'une plaque 1.11.

Les plaques 1.11 sont amenées par les courroies 1.20 sur les barres T, la distance entre l'objectif de la caméra 1.14 et la surface des plaques est toujours la même, la mise à point est donc garantie.

Une calibration du système optique d'illumination peut être réalisée au moyen d'une plaque de verre à réticule. L'image de la réticule est focalisée en ajustant la hauteur de la caméra CCD 1.14.

Dans la fig.6 est décrit un deuxième mode de réalisation selon l'invention. Dans ce mode de réalisation, le dispositif qui amène les particules dans le champ de la prise d'image est constitué d'une plate-forme circulaire comme par exemple un disque en acier sur laquelle sont fixées les plaques de préférence en verre. Le disque en acier est soudé à un axe motorisé. La vitesse de rotation est réglable, la combinaison entre cette vitesse et l'intensité de vibration de la goulotte vibrante permet d'optimiser la dispersion des particules sur la plaque.

Le dispositif de prise d'image, par exemple une caméra CCD est synchronisée avec la position des plaques. Un signal de trigger extérieur est généré par une photodiode. A chaque passage d'une plaque, un système de détection envoie une impulsion à la caméra. L'image est donc stockée dans la caméra et analysée en temps réel par un logiciel. Le logiciel permet au moyen d'une procédure de seuillage simple d'extraire le contour de l'ombre de la particule pour l'analyse de sa taille ou de sa forme. Le nombre d'images prises dépend de la vitesse de rotation et du nombre des plaques fixées sur le disque (par exemple 8 plaques), mais une limite supérieure est aussi imposée par la rapidité de calcul de l'ordinateur.

Un bac de récupération ou collecteur peut également être fixé dans la partie inférieure du disque, les particules qui tombent entre les plaques sont récoltées dans ce bac.

Les particules qui sont analysées, sont chargées sur les plaques à la sortie A d'une goulotte vibrante comme dans le premier mode de réalisation de l'invention. L'image est prise en C en correspondance de l'axe de la caméra et pour finir une brosse B très souple nettoie la surface des plaques P. Ces dernières particules sont aussi récupérées dans le même bac R.

### EXEMPLE 1 : comparaison de la méthode selon l'invention avec la méthode de tamisage.

La méthode selon l'invention et dénommée dans la suite ALPAGA a été comparée avec la méthode de tamisage obtenus avec 100gr de sable BCR-68 utilisée par 5 laboratoires différents et reconnus par le Bureau of Certified References (BCR). Le tableau 2 illustre la bonne concordance des mesures.

**Tableau 2 :**

| | | |
|---|---|---|
| Il faut mettre en évidence que cette analyse est faite sur six grammes de sable, contre les cent grammes utilisés par les labos du BCR. Les valeurs de tamisage représentent une moyenne des valeurs obtenues par les cinq labos du BCR. | | |

| comparaison de la méthode selon l'invention avec les méthodes de tamisage. | | |
|---|---|---|
| µm | Sieve (100g) | Alpaga (6g) |
| 160 | 4.2 | 3.89 |
| 250 | 22.9 | 20.68 |
| 320 | 44.9 | 39.80 |
| 400 | 68.9 | 67.95 |
| 500 | 88.8 | 88.87 |
| 630 | 97.4 | 98.24 |

## Revendications

1. Appareillage pour mesure automatique de granulométrie et de morphométrie de particules comprenant:
- un dispositif pour une dispersion de particules de manière à prévenir leur recouvrement relié à
- un dispositif pour guider les particules dans un champ focal d'un système d'illumination connecté à
- un dispositif pour prise d' images de ces particules et leur analyse à des fins granulométrique et morphométrique
**caractérisée en ce que**:
les particules sont dispersées sur une plaque horizontale et guidées horizontalement dans le champ focal du système d'illumination.

2. Appareillage selon la revendication 1 dans lequel la plaque sur laquelle sont dispersées les particules est transparente.

3. Appareillage selon l'une des revendications 1 ou 2 dans lequel la plaque sur laquelle sont dispersées les particules est attachée à une bande transporteuse.

4. Appareillage selon la revendication 3 dans lequel la bande transporteuse comprend 2 courroies parallèles guidées par 3 roues crantées.

5. Appareillage selon l'une quelconque des revendications 1 à 4 comprenant également un système de contrôle de la position de la plaque dans le champ focal du système d'illumination.

6. Appareillage selon la revendication 1 ou 2 dans lequel la plaque sur laquelle sont dispersées les particules est attachée à une plate-forme circulaire.

7. Appareillage selon l'une quelconque des revendications précédentes comprenant également un système de nettoyage de plaque.

8. Appareillage selon l'une quelconque des revendications précédentes dans lequel le système d'illumination comprend un éclairage diascopique.

9. Appareillage selon l'une quelconque des revendications précédentes dans lequel le système d'illumination comprend un éclairage collimaté et une optique télécentrique.

10. Méthode pour mesure automatique de granulométrie et de morphométrie de particules comprenant les étapes de:
- dispersion des particules de manière à prévenir leur recouvrement suivie du
- guidage des particules dans le champ focal d'un système d'illumination et
- prise d'image des particules suivie de leur analyse à des fins granulométrique et morphologique,
**caractérisé en ce que**
les particules sont dispersées sur une plaque horizontale et guidées horizontalement dans le champ focal du système d'illumination.

11. Méthode selon la revendication 10 comprenant également une étape de nettoyage de plaque après passage dans le champ focal du système d'illumination.

12. Utilisation de l'appareillage selon l'une quelconque des revendications 1 à 9 pour effectuer un contrôle de la qualité de produit.

13. Utilisation de l'appareillage selon l'une quelconque des revendications 1 à 9 dans une ligne de production.
